# FASCICULE DE BREVET EUROPEEN

(11) **EP 2 075 733 B1**
(45) Date de publication et mention de la délivrance du brevet: **05.03.2014**
(21) Numéro de dépôt: 08170530.3
(22) Date de dépôt: 02.12.2008
(51) Int. Cl.: G06F 21/53

(54) **Dispositif et un procédé de protection contre la rétro conception**
Vorrichtung und Schutzverfahren gegen Reverse Engineering
Device and method for protecting against reverse engineering

(30) Priorité: 05.12.2007 FR 0708504
(43) Date de publication de la demande: 01.07.2009
(73) Titulaire: SAGEM Défense Sécurité, 75015 Paris (FR)
(72) Inventeur: Brossard, Jonathan, 75015, PARIS (FR)
(74) Mandataire: Maillet, Alain

(56) Documents cités:
- NEVILLE-NEIL, G.V., MCKUSICK K.: "Free BSD Process Management"[Online] 4 mars 2005 (2005-03-04), XP002488037 INET Extrait de l'Internet: URL:http://www.informit.com/articles/artic le.aspx?p=366888&seqNum=9> [extrait le 2008-07-14]
- DRAGONFLY: "Jail_Attach" DRAGONFLY ON-LINE MANUAL PAGES, [Online] 5 janvier 2007 (2007-01-05), XP002488038 INET Extrait de l'Internet: URL:http://leaf.dragonflybsd.org/cgi/web-m an?command=jail_attach&section=2> [extrait le 2008-07-14]
- "Displaying Ubuntu Linux Applications Remotely (X11 Forwarding)" INET, [Online] 27 août 2007 (2007-08-27), XP002488039 INET Extrait de l'Internet: URL:http://www.techotopia.com/index.php/Di splaying_Ubuntu_Linux_Applications_Remotel y_(X11_Forwarding)> [extrait le 2008-07-14]

## Description

La présente invention concerne un dispositif et un procédé permettant de protéger un logiciel exécutable d'une tentative de rétro conception par une personne habilitée à l'utiliser.

Le concepteur d'un logiciel peut être amené à souhaiter protéger son logiciel et le savoir faire qui y est embarqué contre toute tentative de rétro conception (*reverse engineering* en anglais), même de la part d'un utilisateur légitime. Or, l'utilisateur légitime d'un logiciel possède généralement une copie de l'exécutable de ce logiciel ou, du moins, peut tenter d'en obtenir la copie lorsqu'il l'exécute sur son ordinateur. Les tentatives de rétro conception peuvent être statiques, par analyse du code de l'exécutable ou dynamique, par exemple en utilisant le logiciel en mode de déboguage.

L'invention vise à résoudre les problèmes précédents par un ordinateur distant sécurisé permettant à un utilisateur d'exécuter depuis un terminal un logiciel exécutable sur l'ordinateur distant. L'ordinateur distant comprend un module de chargement permettant le téléchargement et l'exécution du logiciel exécutable au sein de la mémoire du processus exécutant le module de chargement, la création d'une prison au sein du système de fichier et l'exécution de l'exécutable dans l'environnement de cette prison.

Ainsi, le logiciel exécutable n'est jamais copié dans le système de fichier servant d'environnement à son exécution. De plus, il n'apparaît pas dans le système dans la liste des processus exécutés.

L'invention concerne un procédé de lancement d'un logiciel exécutable par un module de chargement exécuté par un dispositif sécurisé comprenant une unité centrale d'ordinateur faisant tourner un système d'exploitation dans l'environnement d'un système de fichier, comprenant une étape de lancement du module de chargement contenu dans le système de fichier ; une étape de création d'une prison constituée d'un sous-ensemble du système de fichier comme environnement d'exécution du module de chargement et ne contenant pas le module de chargement ; une étape de chargement du logiciel exécutable au sein de la mémoire du processus exécutant le module de chargement et une étape de passage du contrôle d'exécution audit logiciel exécutable résultant en son exécution au sein de la mémoire du processus exécutant le module de chargement et dans l'environnement du système de fichier constitué par la prison.

Selon un mode particulier de réalisation de l'invention, la copie du logiciel exécutable chargée étant chiffrée, le procédé comporte en outre une étape de déchiffrement du logiciel exécutable.

Selon un mode particulier de réalisation de l'invention, la copie du logiciel exécutable chiffrée est stockée au sein de la prison, seule la version en clair étant chargée en mémoire.

Selon un mode particulier de réalisation de l'invention, l'étape de chargement du logiciel exécutable est précédée d'une étape d'authentification du module de chargement auprès du serveur diffusant ledit logiciel exécutable.

Selon un mode particulier de réalisation de l'invention, le procédé comporte en outre une étape de déportation des entrées sorties sur un terminal utilisateur connecté au dispositif sécurisé via un réseau de communication.

Selon un mode particulier de réalisation de l'invention, l'étape de déportation des entrées sorties sur un terminal utilisateur est effectuée via un tunnel chiffré.

Selon un mode particulier de réalisation de l'invention, le procédé comporte une étape d'insertion d'un nombre aléatoire d'octets au début de chaque segment de code exécutable au chargement du logiciel exécutable.

L'invention concerne également un dispositif sécurisé pour l'exécution d'un logiciel exécutable comportant une unité centrale d'ordinateur ; un système d'exploitation s'exécutant sur cette unité centrale ; un système de fichier servant d'environnement d'exécution au système d'exploitation et un module de chargement pour le lancement d'un logiciel exécutable stocké dans le système de fichier et comportant lorsqu'il est lancé des moyens de création d'une prison constituée d'un sous-ensemble du système de fichier comme environnement d'exécution du module de chargement et ne contenant pas le module de chargement ; des moyens de chargement du logiciel exécutable au sein de la mémoire du processus exécutant le module de chargement et des moyens de passage du contrôle d'exécution audit logiciel exécutable résultant en son exécution au sein de la mémoire du processus exécutant le module de chargement et dans l'environnement du système de fichier constitué par la prison.

Selon un mode particulier de réalisation de l'invention, l'unité centrale est ceinte dans une enceinte anti-intrusion.

Selon un mode particulier de réalisation de l'invention, la copie du logiciel exécutable chargée étant chiffrée, le module de chargement comporte en outre des moyens de déchiffrement du logiciel exécutable.

Selon un mode particulier de réalisation de l'invention, le module de chargement comprend en outre des moyens de s'authentifier auprès d'un serveur diffusant le logiciel exécutable.

Selon un mode particulier de réalisation de l'invention, le module de chargement comprend en outre des moyens pour déporter les entrées sorties du logiciel exécutable sur un terminal utilisateur connecté au dispositif sécurisé par un réseau de communication.

Selon un mode particulier de réalisation de l'invention, le système d'exploitation est modifié pour en retirer les primitives indispensables au fonctionnement d'un procédé de déboguage.

Selon un mode particulier de réalisation de l'invention, le module de chargement comporte en outre des moyens d'insérer un nombre aléatoire d'octets en début de chaque segment de code exécutable au chargement du logiciel exécutable.

Selon un mode particulier de réalisation de l'invention, le système d'exploitation comporte des moyens d'interdire qu'un segment de mémoire autorisé en écriture puisse être exécutable.

Selon un mode particulier de réalisation de l'invention, le système d'exploitation comporte des moyens de contrôle de ressource par liste de contrôle d'accès.

Selon un mode particulier de réalisation de l'invention, le système d'exploitation comporte des moyens de détruire le logiciel exécutable et le module de chargement en cas d'erreur d'adressage lors de l'exécution du logiciel exécutable.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 illustre l'architecture générale matérielle d'un exemple de réalisation de l'invention.
La Fig. 2 illustre le concept de prison au sein d'un système de fichier.
La Fig. 3 illustre le processus de chargement du logiciel exécutable par le module de chargement.
La Fig. 4 illustre l'organigramme de fonctionnement du module de chargement dans un exemple de réalisation de l'invention.

La présente invention propose un dispositif et un procédé permettant la distribution d'un logiciel exécutable à un utilisateur ayant le droit légitime de l'utiliser tout en protégeant ledit logiciel contre toute tentative de rétro conception visant à en déterminer les principes de fonctionnement. Il peut être intéressant de distribuer des logiciels dans ce contexte, par exemple dans le cas où le logiciel effectue une simulation de fonctionnement d'un appareil dont on souhaite garder secret le mode de fonctionnement. Dans ce cas, la simulation est modélisée en fonction de ces règles de fonctionnement et l'on veut empêcher que ces règles puissent être déterminées par rétro conception du logiciel.

La rétro conception logicielle prend classiquement deux formes. Une première forme dite statique est faite par analyse du code exécutable en dehors de toute exécution du logiciel. Des outils permettent de reconstituer un pseudo code intelligible par analyse des structures de contrôle du code exécutable généré. Pour interdire toute rétro conception statique du logiciel, il faut veiller à ce que le code exécutable du logiciel ne puisse pas entrer en possession de l'utilisateur. Il faut donc protéger ce code lors de sa livraison à l'utilisateur. Cette protection peut être faite, par exemple, par chiffrement ou encore en enfermant ce code au sein d'un dispositif protégé physiquement contre une tentative d'effraction. Nous détaillerons ces modes de protections plus loin.

La rétro conception logicielle peut également prendre une forme dynamique. Dans cette forme, on tente de reconstituer le fonctionnement du logiciel par une étude de son exécution. Des outils d'aide au déboguage peuvent alors être utilisés. Ces outils permettent de stopper l'exécution d'un logiciel pour explorer les données et d'effectuer des exécutions pas à pas. Par une étude du comportement pas à pas du logiciel et de l'évolution des données au cours de l'exécution, on en déduit son fonctionnement. La protection passe alors par la mise hors service de ces outils d'aide au déboguage, par exemple en supprimant dans le noyau du système d'exploitation les primitives indispensables au fonctionnement de tels outils.

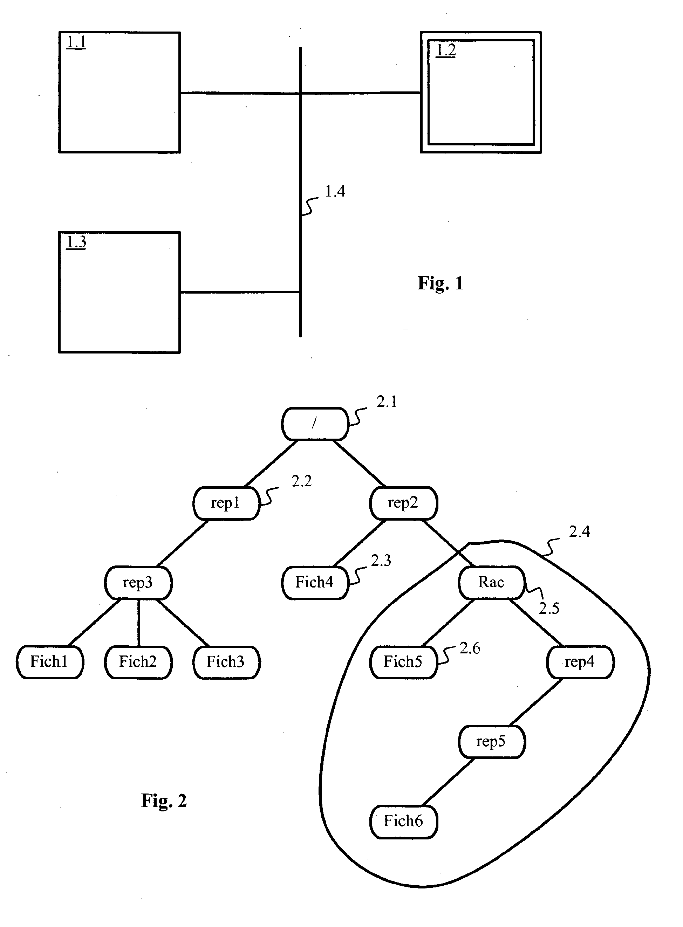

La Fig. 1 illustre l'architecture d'un exemple de réalisation de l'invention. Dans cet exemple, un dispositif sécurisé est dédié à l'exécution du logiciel exécutable. Ce dispositif sécurisé est référencé 1.2. Il s'agit d'un ordinateur, par exemple de type PC, fonctionnant sous un système d'exploitation pouvant être Linux. Ce dispositif sécurisé est connecté via un réseau de communication 1.4, par exemple fonctionnant selon le protocole IP (*Internet Protocol* en anglais, référencé dans la RFC 791). Pour faire fonctionner un logiciel exécutable via le dispositif sécurisé 1.2, un utilisateur doit utiliser un terminal référencé 1.1. Ce terminal a pour fonction principale d'offrir les moyens d'entrée sortie du logiciel exécuté sur le dispositif sécurisé 1.2. Dans le mode de réalisation proposé, un serveur 1.3 est accessible via le réseau de communication. Ce serveur met à disposition le logiciel exécutable devant être exécuté de manière sécurisée par le dispositif sécurisé 1.2.

Le dispositif sécurisé 1.2 est en mesure d'exécuter un logiciel exécutable dit générique. Ce logiciel exécutable est dit générique dans le sens où son développement ainsi que la production du code est standard, il ne prend pas en compte les contraintes de sécurité liées à la protection contre la rétro conception. En particulier, il peut être exécuté sur un système classique et n'offre pas, dans ce cas, de protection particulière contre la rétro conception. Cette protection est prise en charge, principalement, par le dispositif sécurisé 1.2. En particulier, il est à noter que ce logiciel exécutable est susceptible de contenir des failles de sécurité pouvant permettre à son utilisateur de tenter de prendre la main sur le système exécutant le logiciel. Il incombe donc au dispositif sécurisé de garantir que des attaques tentant de tirer partie d'éventuelles failles au sein du logiciel exécutable ne peuvent pas aboutir à une rétro conception de ce logiciel.

Physiquement, le dispositif sécurisé comprend l'unité centrale d'un ordinateur clos au sein d'une enceinte anti-intrusion. L'unité centrale comportant cette enceinte peut être conçue à l'image des distributeurs de billets de banque, de telle sorte qu'une tentative d'intrusion se traduit par la destruction des informations stockées dans le dispositif que ce soit sur disque dur ou en mémoire. Ces mécanismes sont connus et ne seront pas décrits plus en détail dans ce document. Avantageusement, les seules entrées sorties permettant de communiquer avec l'intérieur de l'enceinte anti-intrusion sont constituées d'une interface réseau, par exemple du type Ethernet, permettant la communication entre le dispositif sécurisé et tout dispositif connecté au réseau 1.4. L'unité centrale peut aussi être protégée en la plaçant dans des locaux contrôlés. Les seules interfaces avec l'extérieur du local sont alors les interfaces réseaux. Alternativement, le dispositif sécurisé peut également être doté d'interfaces telles qu'une interface permettant le branchement de dispositifs de stockage externe comme un disque sur puce mémoire appelé clé USB, un disque dur externe ou un lecteur de disque optique. Toutefois ces interfaces constituent autant de points susceptibles d'abaisser le niveau de sécurité et doivent être protégées. L'interface réseau permet un fonctionnement déporté du logiciel exécutable depuis le terminal 1.1. Divers protocoles sont connus pour offrir ce type de service, on peut citer X11 dans le monde UNIX, TSE (*Terminal Server Edition* en anglais) dans le monde Windows ou autres. Avantageusement, la communication entre le terminal et le dispositif sécurisé peut être protégée par l'utilisation d'un tunnel chiffré, technique connue sous le nom de réseau privé virtuel ou VPN (*Virtual Private Network* en anglais). Des protocoles tels que PPTP (*Point to Point Tunneling Protocol* en anglais) ou IPsec (*Internet Protocol Security* en anglais) permettent la mise en place de tels tunnels où les données échangées sont automatiquement chiffrées entre le terminal et le dispositif sécurisé.

Un système d'exploitation, et donc les logiciels exécutés sur la machine faisant tourner ce système d'exploitation, fonctionnent dans un environnement de fichier appelé système de fichier. Ce système permet de localiser les ressources extérieures au système ou au programme en cours d'exécution et indispensables à cette exécution. Ce système permet de localiser des ressources comme les fichiers de données, mais aussi les librairies systèmes utilisables, les programmes et même les pilotes de composants matériels, en particulier les pilotes d'entrées sorties. Les ressources localisables dans le système de fichier peuvent être des ressources stockées sur des moyens de stockages permanents comme les disques durs, mais aussi sur des espaces en mémoire, morte ou vive, rendus accessibles à ce système de fichier. Les systèmes de fichiers sont généralement organisés sous la forme d'un arbre orienté de noeuds. Chaque noeud peut représenter soit un répertoire contenant d'autres noeuds, soit une ressource élémentaire, un fichier, qu'il est possible de lire, d'écrire ou d'exécuter, ces possibilités pouvant être limitées par des droits d'accès ou des impossibilités physiques. Il est, par exemple, impossible d'écrire sur un fichier stocké en mémoire morte.

La Fig. 2 illustre un tel système de fichier. Ce système de fichier contient un noeud particulier appelé racine du système référencé 2.1. Il contient également des répertoires 2.2 et des fichiers 2.3. Chaque élément du système de fichier est repéré par son chemin à partir de la racine 2.1 constituée par la liste des répertoires qu'il faut traverser pour l'atteindre. Le fichier « Fich4 », par exemple, est désigné par le chemin «/rep2/Fich4 » qui permet de le désigner de manière unique au sein du système de fichier et de le localiser.

Certains systèmes d'exploitation offrent la possibilité de créer ce que l'on appelle une prison au sein du système de fichier. Une prison consiste à changer la racine du système de fichier en prenant pour racine un répertoire du système original. Dans l'exemple de la Fig. 2, la nouvelle racine est le répertoire référencé 2.5. Ce faisant, on isole la partie du système de fichier dépendante de la nouvelle racine 2.5 qui constitue la prison 2.4. On appelle ce sous-ensemble du système d'exploitation prison car une fois que la racine est changée, il n'est pas possible de sortir de la prison. En effet, il n'y a plus aucun moyen de désigner des objets hors de la prison, tous les chemins permettant de désigner des objets ayant pour origine la racine. Un exécutable lancé dans l'environnement de la prison n'aura donc aucune possibilité d'accès aux ressources du système de fichier extérieures à la prison. Par exemple, les systèmes UNIX contiennent une primitive *chroot* qui permet de lancer un exécutable au sein d'une prison. La commande *« chroot*/*rep2*/*Rac*/*Fich5 »* permet de lancer l'exécutable Fich5 au sein de la prison 2.4. Elle fonctionne de la manière suivante. Dans une première étape, elle crée la prison en prenant pour racine du système de fichier son premier argument. Après cette première étape, la prison est créée et l'on se trouve enfermé à l'intérieur. Dans une seconde étape, elle cherche l'exécutable fourni en second argument, ici/*Fich5,* au sein de la prison et lance son exécution. On voit donc que de cette manière, l'exécutable que l'on souhaite lancer dans la prison doit se trouver présent dans le système de fichiers de la prison ainsi que toutes les ressources qui lui sont nécessaires.

Le système d'exploitation du dispositif sécurisé met en oeuvre un module de chargement ou chargeur dont la fonction est de lancer l'exécution du logiciel exécutable que l'on veut protéger contre la rétro conception. Ce chargeur se trouve donc dans le système de fichier du dispositif sécurisé. Ce chargeur crée une prison au sein de laquelle est exécuté le logiciel exécutable à protéger. Mais son fonctionnement diffère de la primitive *chroot* que nous avons décrit. Avantageusement, le logiciel exécutable n'est jamais copié au sein de la prison. De cette façon, une attaque permettant à un intrus de prendre le contrôle du logiciel exécutable ne trouvera pas de copie du logiciel dans la prison, seul espace auquel il aura accès.

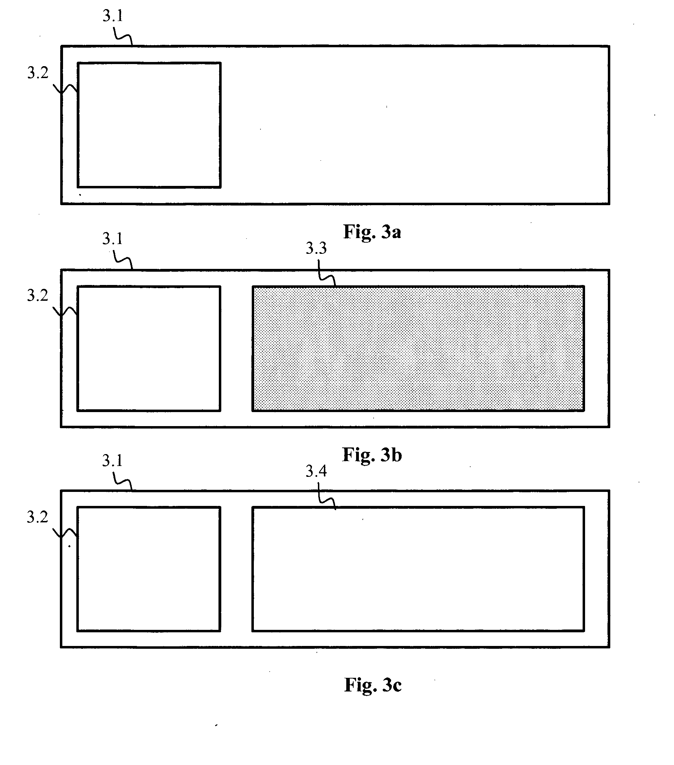

La Fig. 3 illustre le processus de lancement du logiciel exécutable par le module de chargement. Dans un premier temps et après avoir créé la prison, Fig. 3a, le module de chargement 3.2 s'exécute dans son espace mémoire 3.1. Dans un second temps, le module de chargement ouvre une connexion réseau pour récupérer une version préférablement chiffrée 3.3 du logiciel exécutable. Cette version est chargée dans l'espace mémoire du module de chargement et n'est pas écrite dans le système de fichier, c'est-à-dire la prison. Ensuite, le module de chargement déchiffre le logiciel exécutable, toujours au sein de son espace mémoire. On arrive donc à la situation illustrée par la Fig. 3c, où le logiciel exécutable en clair 3.4 est présent au sein de l'espace mémoire du processus du module de chargement. Le contrôle d'exécution est alors passé au logiciel exécutable qui commence son exécution. On voit que ce procédé permet de lancer le logiciel exécutable dans l'environnement de la prison sans qu'une copie de ce logiciel ne soit jamais écrite dans le système de fichier de la prison. On constate également qu'à aucun moment n'est créé un processus pour l'exécution du logiciel système qui se charge au sein de la mémoire du module de chargement et prend la place de celui-ci. Une inspection des processus actifs dans le système ne fait donc pas apparaître le logiciel exécutable en tant que tel. De plus, une éventuelle copie de la mémoire, très improbable, ne donnerait accès qu'à un programme composé du module de chargement et du logiciel exécutable indissociablement imbriqués. Une rétro conception de cet ensemble serait donc plus complexe à réaliser qu'une rétro conception du seul logiciel exécutable.

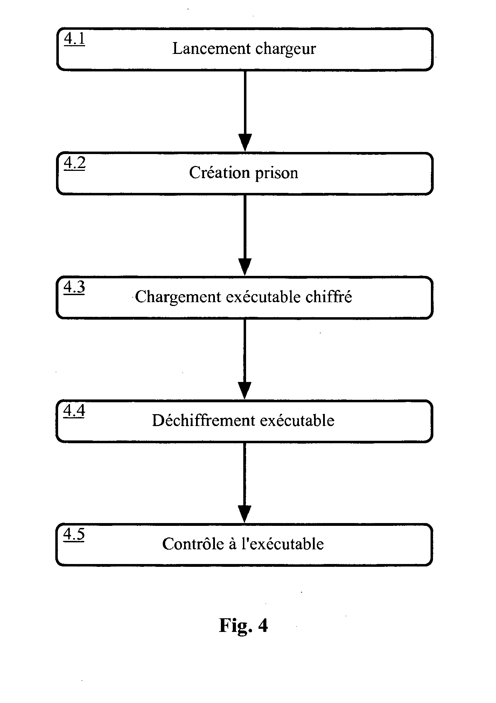

Le fonctionnement du chargeur ou module de chargement, selon l'exemple de réalisation de l'invention, est illustré par l'organigramme de la Fig. 4. Lors d'une première étape 4.1, le module de chargement est lancé. Celui-ci se trouve dans le système de fichier du dispositif sécurisé hors de la partie qui constituera la prison. Il contient les clés permettant le déchiffrement du logiciel exécutable. Après son lancement, il crée la prison lors d'une étape 4.2. À partir de ce moment, seule la partie du système de fichier constituant la prison est accessible. La prison devient le nouvel environnement d'exécution du module de chargement. Le module de chargement se connecte alors sur le serveur 1.3 qui met à disposition le logiciel exécutable sous une forme chiffrée et charge celui-ci dans sa mémoire lors d'une étape 4.3. Ce téléchargement peut utiliser tout type de protocole permettant la copie de fichier, comme FTP (*File Transfer Protocol* en anglais défini dans la RFC 959) ou HTTP (*Hyper Text Transport Protocol* en anglais défini dans la RFC 2616). Une fois la copie du logiciel exécutable chiffré copiée au sein de la mémoire du module de chargement, cette copie est déchiffrée lors d'une étape 4.4. Le contrôle d'exécution est alors passé du module de chargement au logiciel exécutable au sein du processus du module de chargement lors de l'étape 4.5. À partir de ce moment-là, le logiciel exécutable est en mesure de fonctionner au service de l'utilisateur via le terminal 1.1. Avantageusement, une étape de déportation des entrées sorties sur le terminal est effectuée pour permettre à l'utilisateur de dialoguer avec le logiciel exécutable, mais on peut imaginer des réalisations où le logiciel exécutable lit des données d'entrée sur un moyen de stockage externe comme une clé USB et y écrit ses sorties. Dans ce cas, il n'est pas nécessaire de mettre en place des entrées sorties déportées sur le terminal.

Alternativement, la copie chiffrée chargée peut être stockée au sein de la prison. Dans ce cas, les étapes de déchiffrement et de chargement dans la mémoire du processus exécutant le module de chargement sont conjointes de façon à garantir qu'à aucun moment ne soit stockée au sein de la prison de copie en clair du logiciel exécutable.

Alternativement, le logiciel exécutable peut être mis à la disposition du module de chargement via d'autres moyens qu'une connexion réseau. Il peut par exemple être transmis au dispositif sécurisé via un moyen de stockage externe comme une clé USB, un disque dur, un disque optique si le dispositif dispose d'une interface permettant de connecter le moyen de stockage.

Alternativement, le logiciel exécutable peut également être livré au sein du système de fichier du dispositif sécurisé en dehors de la prison. Dans ce cas, le chiffrement est optionnel puisque le logiciel est stocké dans un endroit considéré comme sûr au sein de l'enceinte anti-intrusion. D'autre part, il est stocké au même endroit que le module de téléchargement qui contient les clés de déchiffrement. On peut donc imaginer qu'un attaquant réussissant à se rendre maître de cette partie du système de fichier pourrait également accéder aux clés de déchiffrement rendant celui-ci caduque. On considère que l'enceinte anti-intrusion avec son dispositif de destruction du système de fichier en cas de tentative d'intrusion rend toute attaque physique improbable et que la vulnérabilité vient de l'exploitation d'une faille de sécurité dans le logiciel exécutable lui-même. Cette exploitation peut permettre à l'attaquant de se rendre éventuellement maître de la prison, prison dont il ne pourra normalement pas sortir pour accéder ni au module de chargement ni à une éventuelle copie du logiciel exécutable. Dans ce mode de réalisation, l'étape 4.3 de chargement est une étape de chargement du logiciel exécutable en clair. Cette étape intervient avant l'étape 4.2 de création de la prison, à un moment où le système de fichier intégral est accessible au chargeur. L'étape 4.4 de déchiffrement est alors inutile.

Avantageusement, l'étape de connexion à un serveur pour charger le logiciel est précédée d'une étape d'authentification auprès de ce serveur. À l'aide d'un certificat, le module de chargement signe sa requête qui est alors authentifiée par le serveur diffusant le logiciel exécutable selon, par exemple, des protocoles d'authentification classiques à clés publiques.

Avantageusement, ce procédé peut être complété par des mécanismes permettant d'améliorer encore le niveau de protection contre les tentatives de rétro conception.

Il est possible d'utiliser un système d'exploitation modifié de façon à ne pas contenir les primitives, systèmes indispensables au fonctionnement d'un outil de déboguage. De cette manière, on se prémunit contre toute possibilité de rétro conception dynamique du logiciel s'exécutant sur le dispositif sécurisé.

Il est également possible d'utiliser des techniques permettant de rendre plus difficiles les techniques d'exploitation de failles de sécurité comme les dépassements de tampon. L'exploitation de telles failles nécessite la détermination de l'adresse de retour de fonction au sein de l'exécutable. Cette adresse est alors utilisée dans le code introduit dans le tampon que l'on fait déborder. Une technique permettant d'augmenter la difficulté de cette détermination consiste à ajouter au chargement du programme un nombre aléatoire d'octets au début de chaque segment de code. L'adressage dans le segment étant relatif au début de celui-ci, l'adresse des fonctions varie de ce nombre aléatoire à chaque chargement en mémoire et donc exécution du logiciel exécutable. Comme la détermination de l'adresse se fait généralement par essais successifs et que l'adresse change à chaque essai, cette détermination est rendue quasiment impossible. De plus, une adresse déterminée lors d'un essai ne sera plus valide lors d'une autre exécution.

Une autre technique, implémentée par exemple dans le module de sécurité appelé PaX pour le système Linux, consiste à marquer chaque segment de mémoire comme autorisé en écriture ou en exécution mais jamais et en écriture et en exécution. En effet, l'exploitation des failles consiste généralement à introduire du code exécutable dans un espace de données comme la pile et de faire en sorte que le contrôle d'exécution passe au code dans cet espace. En interdisant qu'un espace dans lequel on peut écrire des données puisse être exécutable, on interdit cette famille de failles de sécurité. Seul le code original de l'application peut être exécuté. Cette technique constitue un moyen d'interdire l'exécution de code dans des zones de mémoires ouvertes à l'écriture de données.

Il est également possible d'utiliser un moyen de contrôle des ressources utilisant des listes de contrôle d'accès de type ACL (*Access Control List* en anglais). Ces techniques offrent un moyen de contrôle des droits d'accès aux ressources plus fins que les droits classiques d'un réseau UNIX. Sous Linux, il est possible d'utiliser le module de sécurité Grsecurity, par exemple, pour ajouter ce moyen de contrôle. Il est à noter que ce module contient le module PaX cité plus haut.

Une autre technique permettant de limiter la détermination des adresses de fonctions par essais successifs consiste à détruire le logiciel exécutable lorsque se produit une erreur d'adressage segment ou une erreur d'adressage bus. En effet, ces erreurs sont détectées par le système, il est alors possible de déclencher une opération de destruction du logiciel exécutable voire même du module de chargement rendant de ce fait le dispositif de sécurité définitivement inopérant. En effet, le fait de provoquer un dépassement de tampon sans avoir correctement déterminé l'adresse de retour de la fonction attaquée provoque généralement une erreur d'adressage par branchement aléatoire du pointeur de contrôle des instructions. Il est possible de ne déclencher la destruction du dispositif de sécurité qu'après l'occurrence d'un nombre donné d'erreurs d'adressage pour éviter une destruction malencontreuse sur une simple erreur soit de programmation soit de manipulation du programme.

Il est également possible d'augmenter le niveau de sécurité par la protection de la liaison réseau entre le terminal de commande utilisé par l'utilisateur et le dispositif sécurisé. Cette protection peut prendre la forme d'un tunnel chiffré ou VPN (*Virtual Private Network* en anglais) qui peut être implémenté par des protocoles tels PPTP (*Point to Point Tunneling Protocol* en anglais) ou L2TP (*Layer 2 Tunneling Protocol* en anglais).

L'exemple de réalisation de l'invention ici décrit est basé sur l'utilisation du système Linux et sur un module de chargement développé en adaptant le code de la primitive *chroot* et de la primitive *execve* de Linux. Mais l'homme du métier comprend que l'on peut réaliser cette invention sur la base de tout système d'exploitation. L'implémentation d'un module de chargement selon les principes ici décrits peut se faire de manière identique sur tout système de la famille des UNIX y compris sur le système MacOS d'Apple basé sur UNIX. Il est également possible de le réaliser sur un système de la famille Windows de Microsoft.

## Revendications

1. Procédé de lancement d'un logiciel exécutable par un module de chargement exécuté par un dispositif sécurisé comprenant une unité centrale d'ordinateur faisant tourner un système d'exploitation dans l'environnement d'un système de fichier, **caractérisé en ce qu'**il comprend les étapes suivantes :
- une étape de lancement du module de chargement contenu dans le système de fichier ;
- une étape de création d'une prison constituée d'un sous-ensemble du système de fichier comme nouvel environnement d'exécution du module de chargement et ne contenant pas le module de chargement ;
- une étape de chargement du logiciel exécutable au sein de la mémoire du processus exécutant le module de chargement résultant en un programme composé du module de chargement et du logiciel exécutable ;
- une étape de passage du contrôle d'exécution audit logiciel exécutable résultant en son exécution au sein de la mémoire du processus exécutant le module de chargement et dans l'environnement du système de fichier constitué par la prison.

2. Procédé selon la revendication 1, **caractérisé en ce que** la copie du logiciel exécutable chargée étant chiffrée, le procédé comporte en outre une étape de déchiffrement du logiciel exécutable.

3. Procédé selon la revendication 2, **caractérisé en ce que** la copie du logiciel exécutable chiffrée est stockée au sein de la prison, seule la version en clair étant chargée en mémoire.

4. Procédé selon l'une des revendications 1 à 3, **caractérisé en ce que** l'étape de chargement du logiciel exécutable est précédée d'une étape d'authentification du module de chargement auprès du serveur diffusant ledit logiciel exécutable.

5. Procédé selon l'une des revendications 1 à 4, **caractérisé en ce qu'**il comporte en outre une étape de déportation des entrées sorties sur un terminal utilisateur connecté au dispositif sécurisé via un réseau de communication.

6. Procédé selon la revendication 5, **caractérisé en ce que** l'étape de déportation des entrées sorties sur un terminal utilisateur est effectuée via un tunnel chiffré.

7. Procédé selon l'une des revendications 1 à 6, **caractérisé en ce qu'**il comporte une étape d'insertion d'un nombre aléatoire d'octets au début de chaque segment de code exécutable au chargement du logiciel exécutable.

8. Dispositif sécurisé pour l'exécution d'un logiciel exécutable comportant :
- une unité centrale d'ordinateur ;
- un système d'exploitation s'exécutant sur cette unité centrale ;
- un système de fichier servant d'environnement d'exécution au système d'exploitation ;
**caractérisé en ce qu'**il comporte également :
- un module de chargement pour le lancement d'un logiciel exécutable stocké dans le système de fichier et comportant lorsqu'il est lancé :
- des moyens de création d'une prison constituée d'un sous-ensemble du système de fichier comme nouvel environnement d'exécution du module de chargement et ne contenant pas le module de chargement ;
- des moyens de chargement du logiciel exécutable au sein de la mémoire du processus exécutant le module de chargement ;
- des moyens de passage du contrôle d'exécution audit logiciel exécutable résultant en son exécution au sein de la mémoire du processus exécutant le module de chargement et dans l'environnement du système de fichier constitué par la prison.

9. Dispositif sécurisé selon la revendication 8, **caractérisé en ce que** l'unité centrale est ceinte dans une enceinte anti-intrusion.

10. Dispositif sécurisé selon l'une des revendications 8 à 9, **caractérisé en ce que** la copie du logiciel exécutable chargée étant chiffrée, le module de chargement comporte en outre des moyens de déchiffrement du logiciel exécutable.

11. Dispositif sécurisé selon l'une des revendications 8 à 10, **caractérisé en ce que** le module de chargement comprend en outre des moyens de s'authentifier auprès d'un serveur diffusant le logiciel exécutable.

12. Dispositif sécurisé selon l'une des revendications 8 à 11, **caractérisé en ce que** le module de chargement comprend en outre des moyens pour déporter les entrées sorties du logiciel exécutable sur un terminal utilisateur connecté au dispositif sécurisé par un réseau de communication.

13. Dispositif sécurisé selon l'une des revendications 8 à 12, **caractérisé en ce que** le système d'exploitation est modifié pour en retirer les primitives indispensables au fonctionnement d'un procédé de déboguage.

14. Dispositif sécurisé selon l'une des revendications 8 à 13, **caractérisé en ce que** le module de chargement comporte en outre des moyens d'insérer un nombre aléatoire d'octets en début de chaque segment de code exécutable au chargement du logiciel exécutable.

15. Dispositif sécurisé selon l'une des revendications 8 à 14, **caractérisé en ce que** le système d'exploitation comporte des moyens d'interdire qu'un segment de mémoire autorisé en écriture puisse être exécutable.

16. Dispositif sécurisé selon l'une des revendications 8 à 15, **caractérisé en ce que** le système d'exploitation comporte des moyens de contrôle de ressource par liste de contrôle d'accès.

17. Dispositif sécurisé selon l'une des revendications 8 à 16, **caractérisé en ce que** le système d'exploitation comporte des moyens de détruire le logiciel exécutable et le module de chargement en cas d'erreur d'adressage lors de l'exécution du logiciel exécutable.

## Patentansprüche

1. Verfahren zum Starten einer Software, die von einem von einer gesicherten Vorrichtung ausgeführten Lademodul ausführbar ist, die eine Computer-Zentraleinheit enthält, welche ein Betriebssystem in der Umgebung eines Dateisystems antreibt, **dadurch gekennzeichnet, dass** es die folgenden Schritte enthält:
- einen Schritt des Startens des im Dateisystem enthaltenen Lademoduls;
- einen Schritt der Erzeugung eines aus einer Teileinheit des Dateisystems bestehenden Jails als neue und das Lademodul nicht enthaltende Ausführungsumgebung des Lademoduls;
- einen Schritt des Ladens der ausführbaren Software in den Speicher des das Lademodul ausführenden Prozesses, was zu einem Programm führt, das aus dem Lademodul und der ausführbaren Software besteht;
- einen Schritt des Übergangs von der Ausführungskontrolle zur ausführbaren Software, was zu ihrer Ausführung im Speicher des das Lademodul ausführenden Prozesses und in der Umgebung des aus dem Jail bestehenden Dateisystems führt.

2. Verfahren nach Anspruch 1, **dadurch gekennzeichnet, dass**, da die geladene Kopie der ausführbaren Software verschlüsselt ist, das Verfahren außerdem einen Schritt des Entschlüsselns der ausführbaren Software aufweist.

3. Verfahren nach Anspruch 2, **dadurch gekennzeichnet, dass** die verschlüsselte Kopie der ausführbaren Software im Jail gespeichert ist, während nur die unverschlüsselte Version in den Speicher geladen wird.

4. Verfahren nach einem der Ansprüche 1 bis 3, **dadurch gekennzeichnet, dass** vor dem Schritt des Ladens der ausführbaren Software ein Schritt der Authentifizierung des Lademoduls beim die ausführbare Software verbreitenden Server liegt.

5. Verfahren nach einem der Ansprüche 1 bis 4, **dadurch gekennzeichnet, dass** es außerdem einen Schritt der Auslagerung der Eingänge/Ausgänge auf ein Benutzerendgerät aufweist, das mit der gesicherten Vorrichtung über ein Kommunikationsnetz verbunden ist.

6. Verfahren nach Anspruch 5, **dadurch gekennzeichnet, dass** der Schritt der Auslagerung der Eingänge/Ausgänge auf ein Benutzerendgerät über einen verschlüsselten Tunnel ausgeführt wird.

7. Verfahren nach einem der Ansprüche 1 bis 6, **dadurch gekennzeichnet, dass** es einen Schritt der Einfügung einer zufälligen Anzahl von Bytes zu Beginn jedes beim Laden der ausführbaren Software ausführbaren Codesegments aufweist.

8. Gesicherte Vorrichtung zur Ausführung einer ausführbaren Software, die aufweist:
- eine Computer-Zentraleinheit;
- ein Betriebssystem, das in dieser Zentraleinheit ausgeführt wird;
- ein Dateisystem, das als Ausführungsumgebung für das Betriebssystem dient; **dadurch gekennzeichnet, dass** sie ebenfalls aufweist:
- ein Lademodul für den Start einer im Dateisystem gespeicherten ausführbaren Software und das, wenn sie gestartet wird, aufweist:
- Einrichtungen zur Erzeugung eines aus einer Teileinheit des Dateisystems bestehenden Jails als neue das Lademodul nicht enthaltende Ausführungsumgebung des Lademoduls;
- Einrichtungen zum Laden der ausführbaren Software in den Speicher des das Lademodul ausführenden Prozesses;
- Einrichtungen zum Übergang von der Ausführungskontrolle zur ausführbaren Software, was zu ihrer Ausführung im Speicher des das Lademodul ausführenden Prozesses und in der Umgebung des aus dem Jail bestehenden Dateisystems führt.

9. Gesicherte Vorrichtung nach Anspruch 8, **dadurch gekennzeichnet, dass** die Zentraleinheit von einem Antieindringgehäuse umgeben ist.

10. Gesicherte Vorrichtung nach einem der Ansprüche 8 bis 9, **dadurch gekennzeichnet, dass**, da die Kopie der geladenen ausführbaren Software verschlüsselt ist, das Lademodul außerdem Einrichtungen zur Entschlüsselung der ausführbaren Software aufweist.

11. Gesicherte Vorrichtung nach einem der Ansprüche 8 bis 10, **dadurch gekennzeichnet, dass** das Lademodul außerdem Einrichtungen aufweist, um sich bei einem die ausführbare Software verbreitenden Server zu authentifizieren.

12. Gesicherte Vorrichtung nach einem der Ansprüche 8 bis 11, **dadurch gekennzeichnet, dass** das Lademodul außerdem Einrichtungen zur Auslagerung der Eingänge/Ausgänge der ausführbaren Software auf ein Benutzerendgerät aufweist, das mit der gesicherten Vorrichtung über ein Kommunikationsnetz verbunden ist.

13. Gesicherte Vorrichtung nach einem der Ansprüche 8 bis 12, **dadurch gekennzeichnet, dass** das Betriebssystem geändert wird, um daraus die für den Betrieb eines Fehlerbeseitigungsverfahrens unbedingt notwendigen Primitiven zu entfernen.

14. Gesicherte Vorrichtung nach einem der Ansprüche 8 bis 13, **dadurch gekennzeichnet, dass** das Lademodul außerdem Einrichtungen zur Einfügung einer zufälligen Anzahl von Bytes zu Beginn jedes beim Laden der ausführbaren Software ausführbaren Codesegments aufweist.

15. Gesicherte Vorrichtung nach einem der Ansprüche 8 bis 14, **dadurch gekennzeichnet, dass** das Betriebssystem Einrichtungen aufweist, um zu verhindern, dass ein schreibberechtigtes Speichersegment ausführbar sein kann.

16. Gesicherte Vorrichtung nach einem der Ansprüche 8 bis 15, **dadurch gekennzeichnet, dass** das Betriebssystem Einrichtungen zur Ressourcenkontrolle pro Zugangskontrollliste aufweist.

17. Gesicherte Vorrichtung nach einem der Ansprüche 8 bis 16, **dadurch gekennzeichnet, dass** das Betriebssystem Einrichtungen zur Zerstörung der ausführbaren Software und des Lademoduls im Fall eines Adressierfehlers bei der Ausführung der ausführbaren Software aufweist.

## Claims

1. Method of starting software able to be run by a loading module, which loading module is run by a secured arrangement comprising a central computer unit which runs an operating system in the environment of a file system, **characterised in that** it comprises the following steps:
- a step of starting the loading module contained in the file system,
- a step of creating a jail which is formed by a sub-system of the file system as a new environment for running the loading module and which does not contain the loading module,
- a step of loading the runnable software into the memory of the process which runs the loading module, resulting in a program made up of the loading module and the runnable software,
- a step of changing over from the control of running to the said runnable software, resulting in its being run on the memory of the process which is running the loading module and in the environment of the file system formed by the jail.

2. Method according to claim 1, **characterised in that**, the copy of the runnable software which is loaded being encrypted, the method also comprises a step of decrypting the runnable software.

3. Method according to claim 2, **characterised in that** the encrypted copy of the runnable software is stored within the jail, only the plain-language version being loaded into memory.

4. Method according to one of claims 1 to 3, **characterised in that** the step of loading the runnable software is preceded by a step of authenticating the loading module at the server which transmits the said runnable software.

5. Method according to one of claims 1 to 4, **characterised in that** it also comprises a step of transferring the inputs/outputs to a user terminal which is connected to the secured arrangement via a communications network.

6. Method according to claim 5, **characterised in that** the step of transferring the inputs/outputs to a user terminal is carried out via an encrypted tunnel.

7. Method according to one of claims 1 to 6, **characterised in that** it comprises a step of inserting a random number of bytes at the beginning of each runnable segment of code, at the loading of the runnable software.

8. Secured arrangement for running runnable software, comprising:
- a central computer unit,
- an operating system which runs on this central unit,
- a file system which acts as an environment for running the operating system, **characterised in that** it also comprises:
- a loading module for starting runnable software which is stored in the file system, which loading module comprises, when it is started:
- means for creating a jail which is formed by a sub-system of the file system as a new environment for running the loading module and which does not contain the loading module,
- means for loading the runnable software into the memory of the process which is running the loading module,
- means of changing over from the control of running to the said runnable software, resulting in its being run on the memory of the process which is running the loading module and in the environment of the file system formed by the jail.

9. Secured arrangement according to claim 8, **characterised in that** the central unit is enclosed in an anti-intrusion enclosure.

10. Secured arrangement according to either of claims 8 and 9, **characterised in that**, the copy of the runnable software which is loaded being encrypted, the loading module also comprises means of decrypting the runnable software.

11. Secured arrangement according to one of claims 8 to 10, **characterised in that** the loading module also comprises means of authenticating itself at the server which transmits the runnable software.

12. Secured arrangement according to one of claims 8 to 11, **characterised in that** the loading module also comprises means of transferring the inputs/outputs of the runnable software to a user terminal which is connected to the secured arrangement by a communications network.

13. Secured arrangement according to one of claims 8 to 12, **characterised in that** the operating system is modified to withdraw from itself the primitives essential to the operation of a debugging process.

14. Secured arrangement according to one of claims 8 to 13, **characterised in that** the loading module also comprises means of inserting a random number of bytes at the beginning of each runnable segment of code, at the loading of the runnable software.

15. Secured arrangement according to one of claims 8 to 14, **characterised in that** the operating system comprises means for forbidding a memory sector to which writing is authorised from being able to be runnable.

16. Secured arrangement according to one of claims 8 to 15, **characterised in that** the operating system comprises means for monitoring resources by an access control list.

17. Secured arrangement according to one of claims 8 to 16, **characterised in that** the operating system comprises means for destroying the runnable software and the loading module in the event of an addressing error when the runnable software is run.
